Europäisches Patentamt

(19) European Patent Office     (11) Numéro de publication: **0 125 194**

Office européen des brevets                                    **B1**

(12)     **FASCICULE DE BREVET EUROPEEN**

(45) Date de publication du fascicule du brevet: **01.07.87**     (51) Int. Cl.⁴: **A 23 K 1/10,** B 09 B 3/00,
                                                                 A 23 L 3/18, A 23 L 3/16,
(21) Numéro de dépôt: **84440019.2**                                A 23 P 1/00, C 02 F 11/00

(22) Date de dépôt: **27.04.84**

(54) **Procédé de cuisson-déshydratation et de stérilisation-dessiccation de déchets organiques, et dispositif pour la mise en oeuvre de ce procédé.**

(30) Priorité: **02.05.83 FR 8307392**

(43) Date de publication de la demande:
**14.11.84 Bulletin 84/46**

(45) Mention de la délivrance du brevet:
**01.07.87 Bulletin 87/27**

(84) Etats contractants désignés:
**AT BE CH DE GB IT LI LU NL SE**

(56) Documents cités:
**DE-B-1 210 666**
**FR-A- 486 799**
**FR-A- 919 072**
**FR-A-1 338 906**
**FR-A-1 572 753**
**FR-A-2 302 751**
**FR-A-2 403 748**
**FR-E- 85 846**
**GB-A- 247 437**
**US-A-1 421 283**

(73) Titulaire: **K. SYSTEME S.A.R.L.**
**Montmoret**
**F-10150 Pont Sainte Marie (FR)**

(72) Inventeur: **Heckmann, Emile Andrz**
**9 rue Thzophile Schuler**
**F-67000 Strasbourg (FR)**

(74) Mandataire: **Hirsch, Marc-Roger**
**Cabinet Hirsch 34 rue de Bassano**
**F-75008 Paris (FR)**

Courier Press, Leamington Spa, England.

**Description**

La présente invention a pour objet un procédé de cuisson-deshydratation et de stérilisation-dessiccation d'un produit constitué notamment par des déchets organiques, dans lequel on chauffe ledit produit en lui transmettant de la chaleur par conduction et par convection à l'aide d'un fluide caloporteur que l'on échauffe dans un foyer et dont on conduit une partie assurant le chauffage par conduction vers la surface extérieure de la paroi d'une cuve renfermant ledit produit, et une autre partie assurant le chauffage par convection vers l'intérieur de ladite cuve, et dans lequel on recycle une partie au moins du fluide d'exhaure issu de l'intérieur de la cuve en le réintroduisant dans le foyer.

En fait, la présente invention concerne la domaine de la valorisation des déchets, notamment dans les industries agro-alimentaires, en particulier des déchets d'équarissage ou des constituants de base organiques de produits aqueux ou liquides, en vue de préserver les propriétés chimico-organiques de leurs constituants de base, et a pour objet un procédé de cuisson-déshydratation et de stérilisation-dessiccation de déchets organiques destiné à cet effet.

L'invention a également pour objet un dispositif pour la mise en oeuvre de ce procédé.

Actuellement, le traitement de tels sous-produits, s'effectue généralement, notamment dans l'industrie d'équarissage, au moyen de cuiseurs à fonctionnement discontinu ou continu à sec. Ces cuiseurs se présentent sous forme d'enceintes chauffées extérieurement à la vapeur ou au moyen de tout autre fluide caloporteur traversant un double enveloppe. Ainsi, ledit fluide caloporteur transmet son énergie calorifique à l'enceinte, qui chauffe les particules de produit en contact avec sa paroi, et, de proche en proche, par conduction thermique toutes les particules du produit jusqu'au coeur de ce dernier.

Ce procédé connu présente, cependant, des inconvénients importants, tant du point de vue économique que de celui de la qualité finale de la farine obtenue.

En effet, la capacité de transmission calorifique de l'enceinte est limitée par les coefficients de conductibilité des fluides en contant et par le coefficient de conductibilité de la paroi de l'enceinte, qui sont définis dans la pratique par un coefficient de transmission moyen K, qui varie, en fonction de la nature des fluides et de l'enveloppe, dans des proportions considérables.

L'effet de limitation de la conductibilité de l'enveloppe est partiellement corrigé, dans la pratique, par une augmentation artificielle de la surface de l'enveloppe, en prévoyant des ailettes, ou autres. Toutefois, les propriétés de conductibilité du produit qui diminuent fortement avec la perte en eau, ne peuvent pas être influencées, de sorte que le cycle de déshydratation s'allonge progressivement dès qu'on souhaite obtenir une farine bien déshydratée.

En outre, la transmission de chaleur à l'intérieur de l'enceinte, de particule à particule du produit, a pour conséquence l'établissement d'un gradient de température, entre l'enveloppe et le coeur du produit, qui est d'autant plus important que la siccité du produit augmente. Les particules situées près des parois doivent donc être beaucoup plus chaudes qu'il ne serait nécessaire à leur cuisson ou déshydratation pour assurer la transmisson de la chaleur aux particules situées au coeur du produit. Il s'ensuit un croûtage des produits peu gras sur les parois, ce qui a pour effet de réduire encore le coefficient K.

Les documents FR—A—2 302 751, FR—A—919072, FR—A—486799 et DE—B—1 210 666 montrent qu'il est connue dans le domaine visé:

— de chauffer le produit à traiter par conduction de la chaleur d'un fluide gazeux caloporteur à travers la paroi d'un récipient renfermant ce produit;

— de chauffer ce produit par convection en le mettant en contact avec un fluide gazeux caloporteur qui, le cas échéant, peut être le même que celui qui sert au chauffage par conduction;

— de recycler une partie au moins de fluide caloporteur d'exhaure vers la source de chaleur (foyer) de manière à provoquer la destruction des matières organiques malodorantes entrainées.

Pour les produits thermosensibles tels que les déchets organiques, cette surchauffe présente un inconvénient grave, à savoir une dégradation de l'aminogramme des composants, qui constitue en fait la valeur marchande des farines.

Il a été de pallier cet inconvénient en abaissant le gradient thermique en utilisant un agitateur mécanique généralement muni d'un rotor chauffant, et disposé à l'intérieur de l'enceinte. Toutefois, un tel agitateur est très onéreux et ne permet qu'une atténuation du gradient.

La présente invention a pour but de pallier les inconvénients des procédés et dispositifs connus, et se rapporte à une procédé dans lequel

— on injecte le fluide caloporteur dans la masse même du produit, assurant ainsi un transfert de chaleur optimum et un chauffage plus uniforme du produit;

— on aspire le fluide d'exhaure dans un cyclone qui en retire toutes les particules (solides) qu'il serait indésirable d'envoyer dans le foyer, lors du recyclage dudit fluide, et l'on ne recycle, par conséquent, dans le foyer, que du fluide gazeux en quelque sorte "épuré", tout en étant assuré de récupérer la totalité des substances solides résultant du traitement;

— on récupère la chaleur résiduaire du fluide d'exhaure par un échange thermique avec l'air frais qui, une fois préchauffé de cette manière, est injecté dans le courant de fluide d'exhaure circulant vers le foyer, ce qui améliore sensiblement le bilan thermique du traitement et, d'évidence, de l'installation servant à sa mise en oeuvre.

Elle a, en effet, pour objet un procédé de cuisson-déshydratation et stérilisation-déssiccation te que décrit ci dessus dans lequel on injecte ladite autre partie du fluide échauffé dans la masse du produit à traiter, on aspire le fluide d'exhaure à recycler hors de la cuve, on sépare ce fluide aspiré des particules solides qu'il peut véhiculer et on introduit le fluide ainsi séparé dans le foyer, puis on ajoute audit fluide d'exhaure, avant la séparation desdites particules solides, de l'air frais que l'on réchauffe préablement par échange thermique avec une partie du fluide caloporteur qui a été en contact avec la parois extérieure de ladite cuve, le foyer assurant la destruction des matières organiques entraînées par le fluide d'exhaure ainsi que le réchauffage de ce fluide.

Elle a également pour objet un dispositif pour la mise en oeuvre du procédé-précité, comportant une cuve définissant une cavité réceptrice fermée pour le produite à traiter, cette cuve étant entourée d'une enveloppe délimitant avec la parois de la cuve une enceinte externe, un foyer susceptible d'aspirer, d'échauffer, puis expulser un fluide gazeux, des moyens de canalisation reliant la sortie du foyer à ladite enceinte et à ladite cavité pour y introduire le fluide échauffé, des moyens de canalisation pour évacuer de l'enceinte et de la cavité ledit fluide et pour diriger une partie au moins du fluide évacué de la cuve vers l'entrée du foyer, un dôme de chargement, ainsi que des moyens pour évacuer le produit de la cuve, caractérisé en ce que lesdits moyens de canalisation comprennent au moins un conduit reliant la sortie du foyer directement à ladite enceinte, au moins un conduit débauchant, d'une part, dans l'enceinte et, d'autre part, dans au moins une buse de diffusion susceptible d'être immergée dans la masse de produit à traiter introduit dans la cavité, au moins un conduit d'évacuation du fluide de la cavité, débouchant, d'une part, dans ladite cavité et, d'autre part, dans l'entrée d'au moins un cyclone, le dispositif comportant en outre un ventilateur associé audit cyclone et appelé à aspirer le fluide de la cavité à travers ledit conduit d'évacuation de celui-ci et à refouler le fluide vers l'entrée du foyer à travers un conduit reliant celle-ci à la sortie dudit cyclone, un conduit d'évacuation du fluide de l'enceinte, qui relie cette dernière à l'entrée du circuit primaire d'une échangeur de chaleur, cependant que la sorte de ce circuit primaire débouche dans l'atmosphère, et un conduit reliant la sortie du circuit secondaire de l'échangeur audit conduit d'évacuation du fluide de cavité, l'entrée dudit circuit secondaire débouchant dans l'atmosphère de manière à constituer une prise d'air frais.

Comme fluide caloporteur, on peut utiliser les gaz de combustion d'un foyer chauffé au fuel ou au gaz ou par tout autre combustible.

Tout autre fluide caloporteur pourra être retenu dans la mesure où il sera suffisament neutre.

Les gaz refroidis et les gaz d'exhaure sont aspirés dans le haut de la cuve à travers un cyclone et dirigés vers le foyer où ils servent de gaz comburant au combustible, de sorte que les composants malodorants sont aventageusement détruits.

De l'air frais est introduit simultanément dans le foyer, et l'ensemble du flux gazeux ainsi régénéré et réchauffé est dirigé vers la cuve pour un nouveau cycle.

L'excédent du flux est dirigé vers un échangeur de chaleur, où il cède ses calories disponibles à l'air frais de régénération, et est ensuite évacué par une cheminée.

Le rapport entre le flux gazeux recyclé et le flux total est ajustable en fonction du produit à traiter.

Une sonde thermique placée dans le conduit d'aspiration des gaz d'exhaure permet de régler la température du foyer en fonction des besoins en calories, et une sonde placée à la sortie du foyer, de régler la température maximale en fonction de la sensibilité thermique du produit à traiter.

Une herse rotative placée à l'intérieur de la cuve assure l'homogénéité du mélange gaz-produit et optimalise la diffusion du gaz à travers le produit.

L'invention sera mieux comprise grâce à la description ci-après, qui se rapporte à des modes de réalisation préférés, donnés à titre d'exemples non limitatifs, et expliqués en référence aux dessins schématiques annexés, dans lesquels:

la figure 1 est une vue en élévation et en coupe d'un dispositif conforme à l'invention, à fonctionnement discontinu;

la figure 2 est une vue de dessus du dispositif de la figure 1;

la figure 3 est une vue analogue à celle de la figure 1 d'un dispositif à fonctionnement continu, et

la figure 4 est une vue de dessus du dispositif de la figure 3.

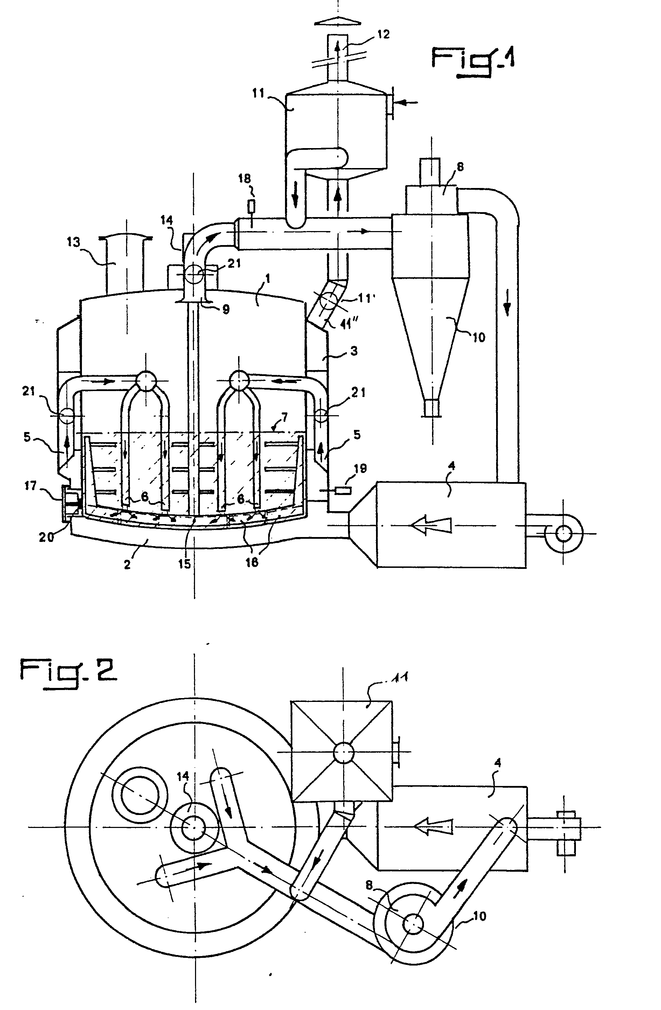

Conformément à l'invention, et comme le montrent plus particulièrement, à titre d'exemple, les figures 1 et 2 des dessins annexés, le dispositif pour la cuisson-déshydratation et la sérilisation-dessiccation de déchets organiques, est essentiellement constitué par une cuve 1 cylindrique verticale munie d'une double enveloppe formant une enceinte 2 raccordée à un foyer 4 à combustible liquide ou gazeux. Dans l'enceinte 2, les gaz chauds issus de foyer 4 circulent dans des carneaux 3, dans la partie inférieure desquels débouchent des conduits 5 d'amenée de ces gaz chauds à des buses de diffusion 6, qui plongent dans le produit 7 contenu dans la cuve 1. A la partie supérieure de cette dernière est prévu un conduit 9 d'aspiration des gaz d'exhaure, qui est relié à un cyclone 10 muni d'une ventilateur 8. Ce dernier aspire lesdits gaz d'exhaure, leur fait traverser le cyclone 10 et les refoule dans le foyer 4. Ce ventilateur 8 aspire simultanément de l'air frais à travers un échangeur de chaleur 11, dont la source chaude est constituée par une partie des gaz de combustion, qui sont évacués des carneaux 3 à travers une vanne de réglage 11' et un conduit 11'' relié à l'entrée de l'échangeur 11, puis à travers une cheminée 12.

La vanne de réglage 11' permet de doser le débit des gaz évacués, et détermine ainsi le taux de recyclage du flux gazeux, qui est réintroduit dans l'enceinte 2 d'où il chauffe extérieurement la cuve 1 avant d'être dirigé à travers les conduits 5 vers les buses 6 qui l'injectent dans le produit à traiter 7.

Ce produit 7 est introduit dans la cuve 1 à travers un dôme de chargement 13, et, pendant le processus de cuisson-déshydratation, il est mélangé en continu avec les gaz chauds issus des buses 6 au moyen d'une herse rotative 15, entraînée par un ensemble motoréducteur 14, et qui est munie de pelles giratoires 16. Par inversion du sens de rotation de la herse 15, il est possible de réaliser l'évacuation du produit en fin de cycle à travers une porte 17.

Le dispositif conforme à l'invention, est muni, en outre, de sondes thermiques 18 et 19 disposées respectivement dans le conduit 9 d'aspiration des gaz d'exhaure et dans l'enceinte 2 à la sortie du foyer 4 permettant de réguler la température, et d'une sonde hygrométrique 20 mesurant le degré de siccité du produit, et disposée avantageusement sur la porte 17. Ces sondes reliées à une armoire de commande (non représentée), permettent un déroulement entièrement automatique du procédé en dehors des opérations de chargement et de déchargement.

Pour la réalisation de traitement spéciaux, tels que l'hydrolyse physique, par exemple, il peut être prévu des vannes d'isolement 21 dans les conduits 9 et 5, permettant une mise sous pression temporaire de la cuve 1.

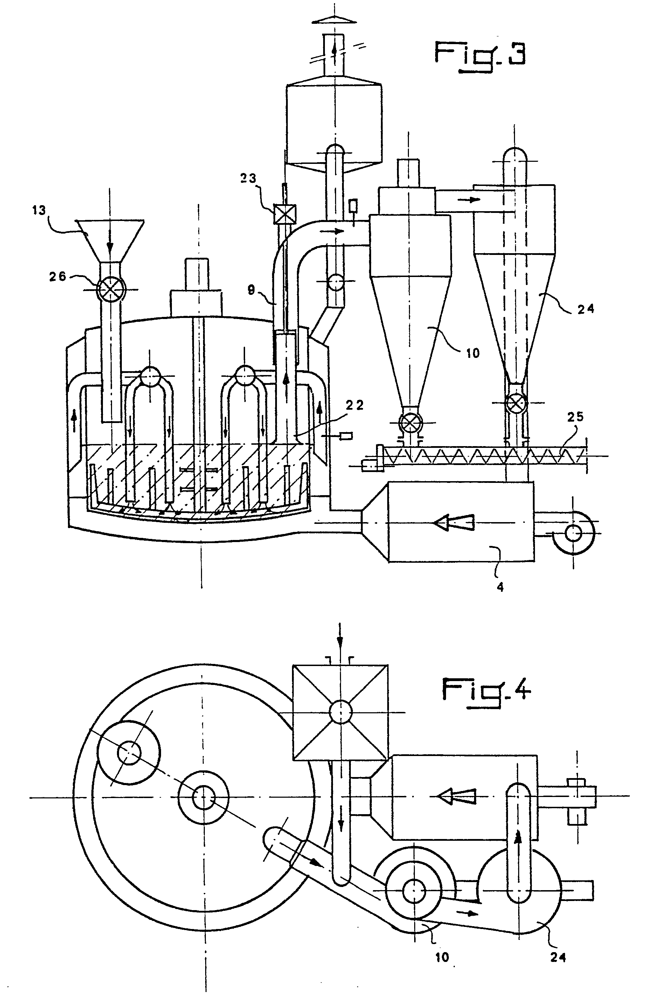

Les figures 3 et 4 représentent une variante de réalisation du dispositif conforme à l'invention, à fonctionnement continu, spécialement adaptée au traitement de produits liquides tels que du sang, ou de produits aqueux ne contenant pas de grosses particules solides.

Dans ce mode de réalisation, le conduit d'aspiration 9 est prolongé par un jupe concentrique mobile 22 débouchant dans la zone supérieure de fluidisation du produit et réglable en hauteur au moyen d'un dispositif de commande à vérin 23, ou analogue, disposé extérieurement au conduit 9, et la farine est récupérée dans le cyclone 10, qui peut être doublé, éventuellement, en fonction de la finesse des grains par un cyclone de parachèvement 24, une vis de transport 25 assurant son évacuation vers un silo de stockage (non représenté), et le dôme de chargement 13 peut être muni d'une écluse d'air 26 dans le cas de traitement de produits aqueux ou être remplacé par une canalisation munie d'un robinet pour le traitement de produits liquides.

Ainsi, pour une puissante thermique donnée, fournie par le foyer 4, le réglage de la vitesse de rotation de l'écluse 26, ou du robinet, détermine le débit horaire de production ou la siccité de la farine.

Grâce au procédé et au dispositif conformes à l'invention, il est possible de chauffer le produit principalement par convection plutôt que par conduction, le fluide caloporteur étant conduit directement dans la masse du produit auquel il transmet, instantanément et sans intermédiaire, ses calories. Ainsi, les effets pernicieux du facteur K et du gradient thermique sont supprimés et le dispositif pour la mise en oeuvre du procédé est de construction moins onéreuse.

En outre, du fait du principe physique appliqué de séchage instantané, la température du fluide caloporteur peut être sensiblement plus élevée entraînant une augmentation sensible du rendement thermique du dispositif.

Chaque particule de produit prélèvant directement sur le fluide uniquement l'énergie calorifique qui lui est nécessaire en vue de sa cuisson ou de sa déshydratation, une comparaison de la température de sortie des gaz d'exhaure et de la température de vaporisation est suffisante pour l'ajustement instantané de la quantité d'énergie à fournir.

L'évaporation spécifique, qui caractérisé l'aptitude d'une installation à faire céder de l'eau, soit sous forme d'humidité, soit sous forme d'eau de constitution, est ainsi pratiquement doublée et permet une diminution substantielle de la consommation d'énergie par rapport aux installations existantes.

Enfin, l'accroissement du coefficient de chaleur spécifique de la masse gazeuse résultant du flux recyclé rend possible la transmission, à débit égal, d'une quantité plus grande de calories, et ainsi une augmentation de la productivité de l'installation. En outre, un gain appréciable est réalisé sur les pertes calorifiques des gaz recyclés et non rejetés à la cheminée, entraînant une économie sur la consommation de combustible.

L'invention a été décrite plus particulièrement à propos du traitement de déchets organiques, mais s'applique également à tous autres produits biodégradables tels que les déchets urbains, ou analogues, ainsi qu'à la dessiccation de produits alimentaires aqueux ou liquides, dont la conservation sera ainsi assurée, et dont le volume sera considérablement réduit permettant une économie correspondante en frais de transport et de stockage.

**Revendications**

1. Procédé de cuisson-déshydratation et de stérilisation-dessiccation d'un produit constitué notamment par des déchets organiques, dans lequel on chauffe ledit produit en lui transmettant de la chaleur par conduction et par convection à l'aide d'un fluide caloporteur que l'on échauffe dans un foyer et dont on conduit une partie assurant le chauffage par conduction vers la surface extérieure de la paroi d'une cuve renfermant ledit produit, et une autre partie assurant le chauffage par convection vers l'intérieur de ladite cuve, et dans lequel on recycle une partie au moins du fluide d'exhaure issue de l'intérieur de la cuve en le réintroduisant dans le foyer, caractérisé en ce qu'on injecte ladite autre partie du fluide échauffé dans la masse du produit à traiter, on aspire le fluide d'exhaure à recycler hors de la cuve, on sépare ce fluide aspiré des particules solides qu'il peut véhiculer et on introduit le fluide ainsi séparé dans le foyer, et en ce qu'on ajoute audit fluide d'exhaure, avant la séparation desdites particules solides, de l'air frais que l'on réchauffe préalablement par échange thermique avec une partie du fluide caloporteur qui a été en contact avec la paroi extérieure de ladite cuve, le foyer assurant la destruction des matières organiques entraînées par le fluide d'exhaure ainsi que le réchauffage de ce fluide.

2. Procédé selon la revendication 1, caractérisé en ce qu'on soumet le produit à traiter à une brassage.

3. Dispositif pour la mise en oeuvre du procédé selon la revendication 1 ou 2, comportant une cuve (1) définissant une cavité réceptrice fermée pour le produit à traiter (7), cette cuve étant entourée d'une enveloppe (3) délimitant avec la paroi de la cuve (1) une enceinte externe (2), un foyer (4) susceptible d'aspirer, d'échauffer, puis expulser un fluide gazeux, des moyens de canalisation reliant la sortie du foyer à ladite enceinte et à ladite cavité pour y introduire le fluide échauffé, des moyens de canalisation pour évacuer de l'enceinte et de la cavité ledit fluide et pour diriger une partie au moins du fluide évacué de la cuve vers l'entrée du foyer, un dôme de chargement (13), ainsi que des moyens pour évacuer le produit de la cuve, caractérisé en ce que lesdits moyens de canalisation comprennent au moins un conduit reliant la sortie du foyer (4) directement à ladite enceinte (2), au moins un conduit (5) débouchant, d'une part, dans l'enceinte (2) et, d'autre part, dans au moins une buse de diffusion (6) susceptible d'être immergée dans la masse de produit à traiter (7) introduit dans la cavité, au moins un conduit d'évacuation (9) du fluide de la cavité, débouchant, d'une part, dans ladite cavité et, d'autre part, dans l'entrée d'au moins un cyclone (10, 24), le dispositif comportant en outre un ventilatuer (8) associé audit cyclone et appelé à aspirer le fluide de la cavité à travers ledit conduit d'évacuation de celui-ci et à refouler le fluide vers l'entrée du foyer (4) à travers un conduit reliant celle-ci à la sortie dudit cyclone, un conduit d'évacuation (11'') du fluide de l'enceinte (2), qui relie cette dernière à l'entrée du circuit primaire d'un échangeur de chaleur (11), cependant que la sortie de ce circuit primaire débouche dans l'atmosphère, et un conduit reliant la sortie du circuit secondaire de l'échangeur (11) audit conduit d'évacuation (9) du fluide de la cavité, l'entrée dudit circuit secondaire débouchant dans l'atmosphère de manière à constituer une prise d'air frais.

4. Dispositif selon la revendication 3, caractérisé en ce qu'il comporte des moyens mécaniques de brassage (15, 16) disposés dans la cuve (1) et associés à des moyens d'entraînement (14).

5. Dispositif selon la revendication 3 ou 4, caractérisé en ce que le conduit d'évacuation (11'') du fluide de l'enceinte (2) est pourvu d'une vanne de réglage (11') permettant de doser le débit du fluide évacué.

6. Dispositif selon au moins une des revendications 3 à 5, caractérisé en ce qu'il est muni de sondes thermiques (18) et (19) disposées respectivement dans la conduit d'évacuation (9) du fluide de la cavité et dans l'enceinte (2) à proximité du foyer (4), ainsi que d'une sonde hygrométrique (20) mesurant le degré de siccité du produit dans la cavité, ces sondes étant reliées à une armoire de commande automatique.

7. Dispositif selon la revendication 2, caractérisé en ce qu'il comporte des vannes d'isolement (21) disposées respectivement dans le conduit d'évacuation (9) du fluide de la cavité et dans le(s) conduit(s) (5) reliant cette dernière à ladite enceinte (2).

8. Dispositif selon la revendication 2 ou 3, notamment pour le traitement de produits liquides tels que du sang, ou analogues, ne contenant pas de grosses particules solides, caractérisé en ce que le conduit d'évacuation (9) du fluide de la cavité est prolongé par une jupe concentrique mobile (22) qui débouche dans la zone supérieure de fluidisation du produit à traiter et qui est réglable en hauteur, et en ce que des moyens de récupération du produit traité, sont disposés au pied du (des) cyclone(s) (10, 24).

9. Dispositif selon la revendication 8, caractérisé en ce que le dôme de chargement (13) est muni d'une écluse d'air (26).

10. Dispositif selon la revendication 8, caractérisé en ce que le dôme de chargement (13) est remplacé par une canalisation de chargement munie d'un robinet.

**Patentansprüche**

1. Verfahren zur Siededehytratisierung und Sterilisationstrocknung eines insbesondere aus organischen Abfällen bestehenden Produktes, bei dem man das Produkt erhitzt, indem man auf dasselbe durch Wärmeleitung oder durch Konvektion vermittels eines wärmetragenden Mediums Wärme überträgt, wobei man das wärmetragende Medium in einer Brennkammereinheit erwärmt und einen ersten Teil dieses Mediums, der die Erhitzung durch Wärmeleitung bewirkt, auf die Aussenfläche der Wandung eines das Produkt enthaltenden Bottichs leitet, während man einen zweiten Teil des Mediums, der die Erhitzung durch Konvektion bewirkt, in den Innenraum des Bottichs leitet, und bei dem man wenigstens einen Teil des aus dem Innenraum des Bottichs abströmenden Mediums durch Rückführung in die Brennkammereinheit wiederverwendet, dadurch gekennzeich, dass man den zweiten Teil des erhitzten Mediums in die Masse des zu behandelnden Produktes einleitet, dass man das rückzuführende abströmende Medium aus dem Bottisch absaugt, dass man dieses abgesaugte Medium von den ggf. von ihm getragenen Festteilchen trennt, und dass man das derart abgeschiedene Medium in die Brennkammereinheit einleitet, ferner gekennzeichnet, dadurch, dass man vor der Abscheidung der Festteilchen dem abströmenden Medium Frischluft beimengt, die man zuvor durch Wärmeaustausch mit einem Teil des wärmetragenden Mediums erwärmt, welche letzteres zuvor mit der Aussenwandung des Bottichs in Berührung stand, wobei die Brennkammereinheit die vom abströmenden Medium mitgerissenen organischen Stoffe zerstört und dieses Medium erhitzt.

2. Verfahren nach Anspruch 1, dadurch gekennzeichnet, dass das zu behandelnde Produkt umgerührt wird.

3. Anlage zur Durchführung des Verfahrens nach Anspruch 1 oder 2, mit einem einen geschlossenen Aufnahmehohlraum für das zu behandelnde Produkt (7) bildenden Bottich (1), der von einem Mantel (3) umgeben ist, welcher mit der Bottichwandung zusammen einen äusseren Raum (2) bildet, sowie mit einer ein gasförmiges Medium ansaugenden, erhitzenden und sodann ausstossenden Brennkammereinheit (4), ferner mit den Auslass der Brennkammereinheit mit dem äusseren Raum und dem Aufnahmehohlraum zwecks Einleitens des erhitzten Mediums in die letzteren verbindenden Leitungsmitteln, sowie mit Leitungsmitteln, die das Medium aus dem äusseren Raum und aus dem Aufnahmehohlraum abführen, um wenigstens einen Teil des aus dem Bottich abgeführten Mediums, zum Einlass der Brennkammereinheit zu leiten, weiterhin mit einem Beschickungsdom (13) und mit Entnahmemitteln zur Entnahme des Produktes aus dem Bottich, dadurch gekennzeichnet, dass die Leitungsmittel wenigstens eine den Auslass der Brennkammereinheit (4) direkt mit dem äusseren Raum (2) verbindende Leitung, sowie wenigstens eine einerseits in den äusseren Raum (2) und andererseits in wenigstens eine in die in den Aufnahmeraum eingebrachte, zu behandelnde Produktmasse (7) eintauchbare Diffusionsdüse (6) mündende Leitung (5), und wenigstens eine Auslasslaitung (9) zum Auslassen des Mediums aus dem Aufnahmeraum umfassen, welch letztere Auslassleitung einerseits in den Aufnahmeraum und andererseits in den Einlass wenigstens eines Zyklons (10, 24) mündet, wobie die Anlage ferner einen mit dem Zyklon verbundenen Ventilator (8) besitzt, der das Medium aus dem Aufnahmeraum durch die Auslassleitung hindurch abzieht und dieses Medium durch eine den Einlass des Zyklons mit dessen Auslass vebindende Leitung zum Einlass des Zyklons drückt, ferner eine Abziehleitung (11'') zum Abziehen des Mediums aus dem äusseren Raum (2), welche den letzteren mit dem Einlass des Primärkreislaufs eines Wärmeaustauschers (11) verbindet, während der Auslass dieses Primärkreislauss in die Atmosphäre mündet, und wobei ferner eine den Auslass des Sekundärkreislaufs des Wärmeaustauschers (11) mit der das Medium aus dem Aufnahmeraum abziehenden Abziehleitung (9) verbindende Leitung vorgesehen ist und der Einlass des Sekundärkreislaufs in die Atmosphäre mündet und somit einen Frischlufteinlass bildet.

4. Anlage nach Anspruch 3, dadurch gekennzeichnet, dass sie im Bottich (1) angeordnete und mit Antriebsmitteln (14) verbundene mechanische Rührmittel (15, 16) unfasst.

5. Anlage nach Anspruch 3 oder 4, dadurch gekennzeichnet, dass die das Medium aus dem äusseren Raum (2) abziehende Abziehleitung (11'') mit einem Steuerventil (11') versehen ist, durch welches der Durchsatz des ausströmenden Mediums regulierbar ist.

6. Anlage nach wenigstens einem der Ansprüche 3 bis 5, dadurch gekennzeichnet, dass sie Temperaturfühler (18, 19) aufweist, die in der das Medium aus dem äusseren Raum (2) abziehenden Abziehleitung (9) bzw. im äusseren Raum (2) in Nähe der Brennkammereinheit angeordnet sind, sowie einen Feuchtigkeitsmessfühler (20), der den Trocknungsgrad des im Aufnahmeraum befindlichen Produktes misst, wobei diese Fühler mit einem automatischen Steuerschaltschrank verbunden sind.

7. Anlage nach Anspruch 3, dadurch gekennzeichnet, dass sie Abschlussventile (21) umfasst, die einerseits in der das Medium aus dem Aufnahmeraum abziehenden Abziehleitung (9) andererseits in der(den) den Aufnahmeraum mit dem äusseren Raum (2) verbindenden Leitung(en) (5) angeordnet sind.

8. Anlage nach Anspruch 3 oder 4, insbesondere zur Behandlung von flüssigen Produkten, wie Blut od. dgl., die keine grossen Feststoffteilchen enthalten, dadurch gekennzeichnet, dass die das Medium aus dem Aufnahmeraum abziehende Abziehleitung (9) durch einen in den oberen Fluidisierungsbereich des zu behandelnden Produkts eintauchenden, höheneinstellbaren und konzentrisch angeordneten beweglichen Hülsenteil (22) verlängert ist, und dass am unteren Ende des Zyklons (der Zyklone) (10, 24) Mittel zum Auffangen des behandelten Produkts angeordnet sind.

9. Anlage nach Anspruch 8, dadurch gekennzeichnet, dass der Beschickungsdom (13) mit einer Luftschleuse (26) versehen ist.

10. Anlage nach Anspruch 8, dadurch gekennzeichnet, dass der Beschickungsdom (13) durch eine mit einem Hahn versehenen Beschickungsleitung ersetzt ist.

**Claims**

1. Process for treating by dehydration baking and sterilization desiccation a product constituted in particular by organic waste, wherein said product is heated by transmitting heat thereto by conduction and by convection by means of a heat-carrying fluid which is heated in a combustion chamber assembly, while one part of said fluid, which effects the heating by conduction, is directed toward the outer surface of the wall of a vat containing said product, and another part of said fluid, effecting the heating by convection, is introduced into the inner space of said vat, and wherein at least a part of the exhaust fluid issuing from said vat is recycled by reintroducing it into said combustion chamber assembly, characterized in that it comprises the steps of injecting said other part of the heated fluid into the mass of product to be treated, aspiring the exhaust fluid to be recycled so as to evacuate it from said vat, separating the thus aspired fluid from the solid particles it may carry and introducing the thus separated fluid into said combustion chamber assembly, and the further step of adding to said exhaust fluid, prior to separating said solid particles therefrom, fresh air which has been previously heated by heat exchange with a part of said heat-carrying fluid that has been in contact with the outer wall of said vat, said combustion chamber assembly ensuring the destruction of the organic substances carried by said exhaust fluid, as well as the re-heating thereof.

2. Process according to claim 1, characterized in that said product to be treated is subjected to stirring.

3. Installation for carrying out the process according to claim 1 or 2, comprising a vat (a) which defines a closed inner receiving space for the product (7) to be treated, said vat being surrounded by an envelope (3) delimiting together with the wall of said vat an outer enclosure (2), said installation further comprising a combustion chamber assembly (4) adapted to aspire, heat and then expulse a gaseous fluid, conduit means connecting the outlet of said combustion chamber assembly to said outer enclosure and said receiving space for introducing the heated fluid into the same, conduit means for evacuating said fluid from said receiving space and directing at least a part of the fluid evacuated from the vat toward the inlet of said combustion chamber assembly, a feeding dome (13), as well as means for extracting said product from said vat, characterized in that said conduit means comprise at least one conduit connecting the outlet of said combustion chamber assembly (4) directly to said outer enclosure (2), at least one conduit (5) opening, on the one hand, into said outer enclosure (2) and, on the other hand, into at least one diffusion nozzle (6) adapted to be immersed in the mass of product (7) to be treated which is introduced into said receiving space, at least one outlet conduit (9) for evacuating said fluid from said receiving space, which outlet conduit opens, on the one hand, into said receiving space and, on the other hand, into the inlet of at least one cyclone (10, 24), said installation further comprising a blower (8) associated to said cyclone and adapted to aspire said fluid from said receiving space through said outlet conduit thereof and to discharge said fluid toward the inlet of said combustion chamber assembly (4) through a conduit connecting the latter to the outlet of said cyclone, an outlet conduit (11'') for evacuating the fluid from the outer enclosure (2), which conduit (11'') connects said outer enclosure (2) to the primary circuit of a heat exchanger (11), whereas the outlet of said primary circuit opens into the atmosphere, and an outlet conduit (9) for evacuating said fluid from said receiving space, whereas the inlet of said secondary circuit opens into the atmosphere so as to constitute a fresh air intake means.

4. Installation according to claim 3, characterized in that it comprises mechanical stirring means (15, 16) mounted within said vat and associated to driving means (14).

5. Installation according to claim 3 or 4, characterized in that said outlet conduit (11'') for evacuating the fluid from said outer enclosure (2) is provided with a control valve (11') allowing to control the flow rate of the fluid being evacuated.

6. Installation according to at least one of claims 3 to 5, characterized in that it comprises heat detectors (18, 19) mounted, respectively, in said outlet conduit (9) for evacuating the fluid from said receiving space and in said outer enclosure (2) in the vicinity of said combustion chamber (4), as well as a hydrometric detector (20) for measuring the degree of dryness of the product placed in said receiving space, said detectors being connected to an automatic control cabinet.

7. Installation according to claim 3, characterized in that it comprises isolating valves (21) mounted, respectively, on the outlet conduit (9) for evacuating the fluid from said receiving space and on the conduit(s) (5) connecting said receiving space to said outer enclosure (2).

8. Installation according to claim 3 or 4, particularly adapted to the treatment of liquid products, such as blood or the like, which do not contain large solid particles, characterized in that said outlet conduit (9) for evacuating the fluid from said receiving space is extended by a concentrically mounted movable skirt member (22) which opens into the upper fluidization zone of the product to be treated, and which is adjustable in height, and in that means for recovering the treated product are disposed at the lower part of the cyclone(s) (10, 24).

9. Installation according to claim 8, characterized in that said feeding dome (13) is provided with an air gate (26).

10. Installation according to claim 8, characterized in that said feeding dome (13) is replaced by a feeding circuit comprising a cock.

Fig.1

Fig.2

**Fig.3**

**Fig.4**